# EUROPEAN PATENT SPECIFICATION

(11) **EP 0 635 579 B1**
(45) Date of publication and mention of the grant of the patent: **29.01.1997**
(21) Application number: 93401887.0
(22) Date of filing: 21.07.1993
(51) Int. Cl.: C22C 21/06, A01L 1/02, A01L 3/02

(54) **Horseshoes of race horse made from metal alloy**
Hufeisen aus Metallegierung für Rennpferde
Fers à cheval en alliage pour cheval de course

(43) Date of publication of application: 25.01.1995
(73) Proprietor: KOREA RACING ASSOCIATION, Kwachun-City, Kyungki-Province (KR)
(72) Inventor: Uhm, Young ho, Seoul (KR); Nam, Tae un, Seoul (FR)
(74) Representative: Lemoine, Robert

(56) References cited:
- FR-A- 980 539
- FR-A- 2 330 316
- US-A- 4 655 293
- W. HUFNAGEL 'ALUMINIUM-SCHLUSSEL' 1983 , ALUMINIUM VERLAG , DUSSELDORF, DE * page 75 - page 80 * * ALLOY 5082*
- J.E. HATCH 'ALUMINIUM' 1984 , AMERICAN SOCIETY FOR METALS , OHIO, US * page 351 - page 359 * * page 352, paragraph 3 -paragraph 4 *

## Description

The present invention relates to a horseshoe for race horses, made of a magnesium rich aluminium alloy. The object of this invention is to provide a light horseshoe for race horses excellent in abrasion resistance, shock absorption, and in ductility.

The horseshoe should primarily be light with ductility so that its shape may be changed a little to correctly fit on the horsehoof. It should also have abrasion resistance to long endure frictions with the surface of the track and reduce the shock that occurs at the time of stepping on the track surface.

Since the conventional horseshoes were heavy as having been made mainly of mild steel, and poor in shock absorption because of their insufficient ductility, shoes have recently been made of alloyed aluminium buried with elastic shock-absorbing materials such as rubber and plastics but found difficult to protect the hooves and knee joints of the horse because of defects from their complex and easily breakable structure.

Since a race horse runs at a speed of 60 Km/Hr during a race undergoing a shock of 1 ton in a moment (0. 017 second). the horseshoesmust be excellent in abrasion resistance and shock absorption and ductile enough to change their shape a little so as to suit the diverse sizes and forms of the hooves at the time of fitting on the later.

To improve and solve the problems of the conventional mild steel or aluminium horseshoes, the present invention relates to a horseshoe made of a magnesium rich aluminium alloy comprising in weight :
Si ; 0.05 - 0.10 %, Fe : 0.05 - 0.10 % ; Cu : 0.10 - 0.20 % ; Mn : 0.10 - 0.20 % ; Mg : 3.00 - 5.00 % ; Cr : 0.05 - 0.15 % ; Zn : 0.05 - 0.10 % and Al : 96.6 - 94.15 %

This alloy is only about one-third of the weight of the known mild steel horseshoe and excellent in abrasion-resistance, shock absorption and ductility. It is a 5XXX series aluminium alloy, which is non-heat treatable, and does not require precipitation hardening with soluting and aging treatments.

The features of the present invention are described below.

A horseshoe for a race horse should primarily be capable of resisting frictions with the track surface, absorbing the momentary shock of one ton occurring from the speed of 60 Km/Hr during a race, and re-sisting abrasion therefrom. In view of this, the horseshoe according to the present invention which is as light as one-third of the conventional mild steel shoe, protects the hooves and knee joints of the race horse, enhances the racing speed and can be securely and perfectly fitted on the hoof by taking advantage of its ductility to modify its shape a little.

As, the aluminium alloy used for manufacturing the horseshoe according to the present invention is an aluminium alloy of the 5XXX series, it does not require precipitation hardening under soluting and aging treatments.

The biggest demerit of the aluminium alloys of the 5XXX series is their excessive Mg content, which causes too much stress corrosion cracking due to re-crystallization annealing, so that, the internal stress is removed to cause an excessive ductility and contraction, which again results in a low hardness and strength. In order to reduce the extreme abrasion resulted therefrom, an appropriately safe strength has been given by adjusting the content of Mg to be 3. 00-5. 00 wt% and adding 0.01-0.10 wt% of Zn thereto so that the shape of the shoe may be modified a little at the time of fitting. Furthermore, to increase anti-corrosive effects of impure materials, Fe is minimized to be 0.05-0.1 wt% and Cu and Mn are reduced respectively to be 0.10-0.20 wt%.

Further, the table below shows the chemical components and the tensile strength and ductility values of an alloy used for manufacturing a horseshoe according to the present invention, which is of the non-precipitation hardening type, as well as of Al-Cu series alloys and Al -Zn series alloy which are of the precipitation hardening type, and Al-Mg and Al-Mg-Zn series alloys which are other alloys of the non-precipitation hardening type.

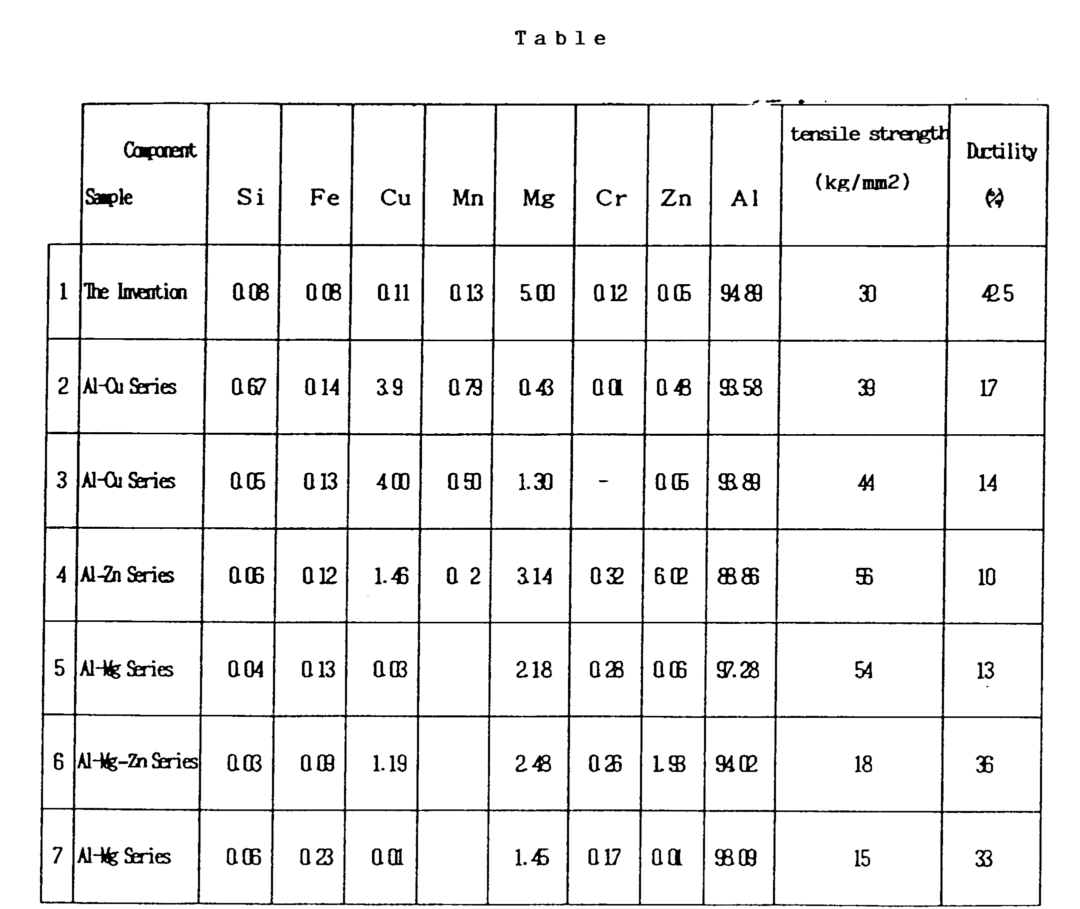

As shown in this table, the invention horseshoe alloy is inferior in tensile strength to the Al-Cu series alloys, Al-Zn series alloy and one of the Al-Mg series alloys but far superior to the other Al-Mg series alloy while its ductility is much greater than the other series alloys with excellent abrasion resistance so that it gives room for modifying its shape as to suit the form of the hoof during fitting.

Al-Cu series alloys of samples 2 and 3, Al-Zn series alloy of sample 4 and Al-Mg-Zn series alloys were kept for 20 minutes at 480°C and for 30 minutes at 500°C. Then, they were placed one hour for soluting treatment at 500°C and underwent aging treatment for 20 hours at 160°C. The Al-Mg-Zn and Al-Mg series alloys of samples 6 and 7, respectively, after going through soluting treatment for two hours at 350°C, under went annealing heat treatment. However, sample 1 made of the invention horseshoe alloy immediately underwent the annealing heat treatment without going through soluting treatment.

The horseshoe according to the present invention is capable of reducing the area of contact with the track surface by the sloped height of its internal and external sides, minimizing the shock of contacting the track surface by evenly distributing the force, and, thereby increasing the durability of the horseshoe.

As stated above, the alloy used for manufacturing horseshoes for race horses according to the present invention is greater in ductility and lighter in weight than the existing mild steel, Al-Zn series alloy or Al-Cu and Al-Mg series alloys of the precipitation hardening type. It is also excellent in abrasion resistance and shock absorption with high ductility. Therefore, the shoes are easily fitted on the hooves and the manufacturing process of same can be rationalized.

### (Example of Application)

The desired aluminium alloy to be used for manufacturing a horseshoe for a race horse is obtained by dissolving and mixing the pure alumnium 96. 39 wt % made by ordinary method under Bayer process with Si :0.08 wt%, Fe:0.08 wt%, Cu:0.15 wt%, Mn:0.13 wt%, Mg:3.00 wt%, Cr:0.12 wt% and Zn:0.05 wt% in an electric furnace.

## Claims

1. A horseshoe made of a magnesium rich aluminum alloy comprising in weight :
- Si : 0.05 - 0.10 % ;
- Fe : 0.05 - 0.10 % ;
- Cu : 0.10 - 0.20 % ;
- Mn : 0.10 - 0.20 % ;
- Mg : 3.00 - 5.00 % ;
- Cr : 0.05 - 0.15 % ;
- Zn : 0.05 - 0.10 % , and
- Al : 96.6 - 94.15 %.

## Patentansprüche

1. Hufeisen bestehend aus einer magnesiumsreichen Aluminium-Legierung umfassend :
- Si : 0,05 - 0,10 Gew.% ;
- Fe : 0,05 - 0,10 Gew.% ;
- Cu : 0,10 - 0,20 Gew.% ;
- Mn : 0,10 - 0,20 Gew.% ;
- Mg : 3,00 - 5,00 Gew.% ;
- Cr : 0,05 - 0,15 Gew.% ;
- Zn : 0,05 - 0,10 Gew.%, und
- Al : 96,6 - 94,15 Gew.%.

## Revendications

1. Fer à cheval fait d'un alliage d'aluminium riche en magnésium comprenant en poids :
- Si : 0,05 - 0,10 % ;
- Fe : 0,05 - 0,10 % ;
- Cu : 0,10 - 0,20 % ;
- Mn : 0,10 - 0,20 % :
- Mg : 3,00 - 5,00 % ;
- Cr : 0,05 - 0,15 % ;
- Zn : 0,05 - 0,10 % ; et
- Al : 96,6 - 94,15 %.
